# EUROPÄISCHE PATENTSCHRIFT

(11) **EP 3 640 393 B1**
(45) Veröffentlichungstag und Bekanntmachung des Hinweises auf die Patenterteilung: **21.04.2021**
(21) Anmeldenummer: 19200341.6
(22) Anmeldetag: 30.09.2019
(51) Int. Cl.: A47L 15/42

(54) **HEIZELEMENT FÜR DEN VERDICHTER EINER WÄRMEPUMPENANORDNUNG**
HEATING ELEMENT FOR THE COMPRESSOR OF A HEAT PUMP ARRANGEMENT
ÉLÉMENT CHAUFFANT POUR LE COMPRESSEUR D'UN AGENCEMENT DE POMPE À CHALEUR

(30) Priorität: 18.10.2018 ES 201831015
(43) Veröffentlichungstag der Anmeldung: 22.04.2020
(73) Patentinhaber: BSH Hausgeräte GmbH, 81739 München (DE)
(72) Erfinder: Ruiz Bermejo, Jose Antonio, 26540 Alfaro (La Rioja) (ES); Vereda Ortiz, Ciro Sebastián, 31014 Pamplona (ES)

(56) Entgegenhaltungen:
- EP-A1- 1 650 343
- CN-U- 203 923 743
- US-A1- 2002 139 137
- US-A1- 2014 138 451
- US-A1- 2017 028 447

## Beschreibung

Die Erfindung betrifft eine Haushaltsgeschirrspülmaschine mit einem Aufnahmeraum zur Aufnahme von Spülgut und einer Wärmepumpenanordnung, die bei ihrem Betrieb von einem Wärmeträger durchströmt wird, wobei die Wärmepumpenanordnung zumindest einen Verdampfer zum Verdampfen des Wärmeträgers, einen Verdichter zum Verdichten des vom Verdampfer kommenden Wärmeträgers und einen Verflüssiger zum Kondensieren des vom Verdichter kommenden Wärmeträgers umfasst.

Ferner wird ein Verfahren zum Betreiben einer Haushaltsgeschirrspülmaschine mit einer Wärmepumpenanordnung beschrieben, die bei ihrem Betrieb von einem Wärmeträger durchströmt wird, und die unter anderem einen Verdampfer, einen Verdichter und einen Verflüssiger umfasst, wobei der Wärmeträger beim Betrieb der Wärmepumpenanordnung mit Hilfe des Verdampfers verdampft wird, wobei der vom Verdampfer kommende Wärmeträger mit Hilfe des Verdichters verdichtet wird, und wobei der vom Verdichter kommende Wärmeträger mit Hilfe des Verflüssigers verflüssigt wird.

Haushaltsgeschirrspülmaschinen sind im Stand der Technik bekannt und dienen prinzipiell dem Reinigen und anschließenden Trocknen von verunreinigtem Spülgut, beispielsweise Geschirr oder Besteck. Während eines oder mehrerer Reinigungsschritte eines Spülprogramms wird das Spülgut mit Spülflotte (= Wasser oder Wasser mit Reinigungs- und/oder Klarspülmittel) beaufschlagt, um Verunreinigungen vom Spülgut zu lösen. Zum Trocknen des Spülguts weisen entsprechende Haushaltsgeschirrspülmaschinen ein Trocknungssystem für das gereinigte Spülgut auf, bei dem Luft das Wasser, das an dem gereinigten Spülgut haftet, aufnimmt und das Spülgut hierdurch trocknet. Die feuchte Luft wird anschließend nach außen geleitet oder an einer kalten Fläche vorbeigeführt, um Wasserdampf zu kondensieren.

Die Haushaltsgeschirrspülmaschine gemäß der vorliegenden Erfindung weist eine nachfolgend beschriebene Wärmepumpenanordnung zum Erwärmen von in der Haushaltsgeschirrspülmaschine zirkulierender Spülflotte auf. Die Wärmepumpenanordnung umfasst prinzipiell einen als Verdampfer wirkenden Wärmetauscher zum Verdampfen eines Wärmeträgers (z. B. Propan (R290)) und einen Verdichter (andere Bezeichnung: Kompressor) zum Verdichten des verdampften Wärmeträgers. Mit Hilfe des Verdichters wird der in den Verdichter beim Betrieb der Wärmepumpenanordnung eintretende gasförmige Wärmeträger komprimiert, wobei er sich erwärmt.

Ferner umfasst die Wärmepumpenanordnung einen als Verflüssiger (andere Bezeichnung: Kondensor) wirkenden Wärmetauscher, in dem der erwärmte gasförmige Wärmeträger wieder kondensiert und hierbei Wärme abgibt, die beispielsweise für die Erwärmung von in der Haushaltsgeschirrspülmaschine vorhandener Spülflotte genutzt werden kann. Anschließend wird der verflüssigte Wärmeträger mit Hilfe eines Expansionsorgans (in der Regel eines Drosselventils oder eines Kapillarröhrchens) entspannt und gelangt schließlich wieder zurück zum Verdampfer, in dem er unter Wärmeaufnahme wieder in den gasförmigen Zustand übergeht, um dann erneut dem Verdichter zugeführt zu werden.

Die genannten Wärmetauscher können beispielsweise als Rohrschlange oder auch als flächig ausgebildeter Wärmetauscher (sogenannte Plattenwärmetauscher) vorliegen. In jedem Fall sind ein Einlass und ein Auslass für den Wärmeträger vorhanden. Ist der Wärmetauscher als Plattenwärmetauscher ausgebildet, so umfasst dieser in der Regel mehrere sandwichartig zueinander angeordnete Abschnitte zweier Hohlräume. Ein erster Hohlraum wird beim Betrieb der Wärmepumpenanordnung vom Wärmeträger durchströmt, während ein zweiter Hohlraum von der Spülflotte durchströmt wird. Innerhalb des Plattenwärmetauschers strömen damit die Spülflotte und der Wärmeträger stets in zueinander benachbarten Abschnitten der jeweiligen Hohlräume, so dass ein Wärmeübergang vom Wärmeträger auf die Spülflotte erfolgt.

Insbesondere der als Verflüssiger dienende Wärmetauscher besitzt vorzugsweise einen Einlass und einen Auslass für die Spülflotte, so dass die Spülflotte an einer oder mehreren Trennwänden des Verflüssigers vorbeigeführt werden kann, der oder die den Verflüssiger intern in mehrere voneinander getrennte Bereiche trennt bzw. trennen, wobei ein erster Bereich von der Spülflotte und ein zweiter Bereich vom Wärmeträger durchströmt wird. Im Bereich der Trennwand erfolgt schließlich die gewünschte Wärmeübertragung vom Wärmeträger auf die Spülflotte, um diese zu erwärmen.

Z.B. umfasst die Geschirrspülmaschine der US 2017/0028447 A1 eine Wärmepumpenanordnung mit einem Plattenkondensor 21. Es ist ein erster Strömungsweg für Spülflotte vorgesehen, der sich vom Sumpf 5 über eine Versorgungsleitung 10 zu einer Umwälzpumpe 11 und über eine dieser nachgeordneten Wasserweiche "diverter 12" über Versorgungsleitungen 10a, 10b zu einer oberen Sprühvorrichtung "sprinkler S1" und zu einer unteren Sprühvorrichtung "sprinkler s2" erstreckt. Vom "diverter 12" zweigt eine Versorgungsleitung zum Plattenkondensor 21 ab. Dessen Ausgang ist über eine Verbindungsleitung 10d mit dem Sumpf 5 verbunden. Mittels des Plattenkondensors 21 lässt sich die Spülflotte des Reinigungsschritts oder des Klarspülschritts erwärmen.

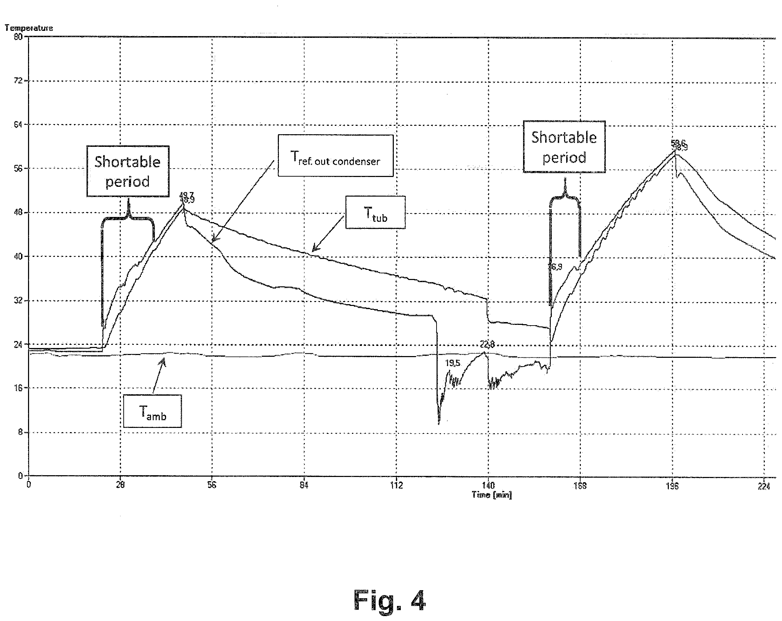

Die CN 203 923 743 U betrifft lediglich einen Wäschetrockner mit Wärmepumpenanordnung. Deren Kompressor 51 ist mit einer Hilfsheizung 6 versehen (siehe z.B. Figur 4).

Die US 2014/0138451 A1 betrifft ein Kurbelgehäuseheizungssteuersystem für ein Wärmepumpensystem, wobei das Kurbelgehäuseheizungssteuersystem umfasst: ein Datenempfangsmodul, das Daten empfängt, die eine Temperatur eines Kompressors des Wärmepumpensystems anzeigen, Daten, die eine Umgebungstemperatur anzeigen, und Daten, die ein aktuelles Datum und eine aktuelle Uhrzeit anzeigen; und ein Leistungssteuermodul, das selektiv eine Heizung des Kurbelgehäuses des Kompressors mit Strom versorgt und die Heizung basierend auf der Temperatur des Kompressors, der Umgebungstemperatur, dem aktuellen Datum und der aktuellen Uhrzeit selektiv deaktiviert.

Die EP 1 650 343 A1 bezieht sich auf einen Wäschetrockner oder einen Waschtrockner mit einer Wärmepumpenanordnung. Die Wärmepumpenanordnung umfasst einen Verdampfer, einen Kompressor, einen Kondensor, und eine Expansions- bzw. Dekompressionsvorrichtung, welche über eine Wärmeträgerkreislaufleitung miteinander verbunden sind. Der Wäschetrockner oder Waschtrockner weist einen Umluftkanal auf, in dem zum Trocknen von Prozessluft aus der Trocknungskammer des Wäschetrockners oder des Waschtrockners die Prozessluft zunächst mittels des Verdampfers der Wärmepumpenanordnung abgekühlt und entfeuchtet, dann mittels des Kompressors der Wärmepumpenanordnung komprimiert und schließlich mittels des nachgeordneten Verflüssigers der Wärmepumpenanordnung wieder aufgeheizt und in die Trocknungskammer zurückgeführt wird. Zumindest ein Abschnitt der Wärmeträger-Verbindungsleitung zwischen dem Verdampfer und dem Kompressor ist im Luftkanal angeordnet. Diesem Abschnitt der Wärmeträger- Verbindungsleitung ist im Umluftkanal eigens eine elektrische Heizung zugeordnet. Die elektrische Heizung wird vor dem Start des Kompressors eingeschaltet, wenn die Temperatur des Wärmeträgers so niedrig ist, dass die Gefahr eines Rückflusses von flüssigem Wärmeträger in den Kompressor besteht.

Aufgabe der vorliegenden Erfindung ist es, aus dem Stand der Technik bekannte Haushaltsgeschirrspülmaschinen sowie das Verfahren zum Betreiben desselben weiterzubilden.

Die Aufgabe wird gelöst durch eine Haushaltsgeschirrspülmaschine sowie ein Verfahren zum Betreiben desselben mit den Merkmalen der unabhängigen Patentansprüche.

Die Haushaltsgeschirrspülmaschine zeichnet sich nun dadurch aus, dass dem Verdichter zumindest ein Heizelement zugeordnet ist, mit dessen Hilfe sich der im Verdichter vorhandene Wärmeträger wenigstens vor dem Betrieb und/oder während des Betriebs des Verdichters derart erwärmbar ist, dass im Verdichter flüssig vorliegender Wärmeträger zumindest teilweise in die Gasphase überführt wird.

Generell kann es im Verdichter zum Kondensieren von zunächst gasförmig vorliegendem Wärmeträger kommen, wenn die Temperatur des Verdichters und des darin enthaltenen Wärmeträgers unter eine von der Art des Wärmeträgers abhängige Temperatur fällt. Dies ist immer dann der Fall, wenn der Verdichter für einen bestimmten Zeitraum, insbesondere zwischen zwei Spülprogrammen, nicht betrieben wird. Dies hat wiederum den Nachteil, dass nicht der gesamte Wärmeträger gasförmig vorliegt, so dass der Wirkungsgrad der Wärmepumpenanordnung nicht optimal ist.

Ebenso kann innerhalb des Verdichters ein Schmiermittel, vorzugsweise ein Öl, zum Einsatz kommen, welches die beweglichen Teile des Verdichters (beispielsweise einen in einem Zylinder geführter Kolben) schmiert, um einen Verschleiß oder eine Beschädigung des entsprechend beweglichen Teils zu verhindern. Da der Abschnitt, in dem das Schmiermittel vorgehalten wird, in der Regel nicht vollständig von dem Druckraum des Verdichters getrennt ist, in dem der Wärmeträger des Wärmepumpenkreislaufes beim Betrieb des Verdichters komprimiert wird, kommt der Wärmeträger zwangsläufig mit dem Schmiermittel in Kontakt. Je nach eingesetztem Schmiermittel und verwendetem Wärmeträger kann es beim Abkühlen des Verdichters, d.h. wenn dieser nicht betrieben wird, vorkommen, dass ein Teil des gasförmig vorliegenden Wärmeträgers innerhalb des Verdichters kondensiert und sich hierbei im Schmiermittel löst.

Das Heizelement ist also ausgebildet, dem Verdichter und damit auch dem Wärmeträger Wärme zuzuführen, wobei die zugeführte Wärme ein Verdampfen des flüssig vorliegenden Wärmeträgers bewirkt. Vorzugsweise ist das Heizelement dabei derart angeordnet, dass es eine Erwärmung des genannten Schmiermittels bewirkt. Die Heizleistung des Heizelements ist vorzugsweise derart bemessen, dass die Erwärmung ausreicht, den flüssig vorliegenden Wärmeträger, der insbesondere zumindest teilweise im Schmiermittel gelöst ist, in seine Gasphase zu überführen. Hierdurch steigt der Anteil des gasförmig vorliegenden Wärmeträgers im Verdichter, so dass mit Hilfe des Verdichters eine im Vergleich zum Stand der Technik höhere Wärmeenergie auf den Wärmeträger übertragbar ist.

Insbesondere ist es in diesem Zusammenhang vorteilhaft, wenn das Heizelement betrieben wird, bevor der Verdichter durch eine Steuer- und/oder Regeleinheit der Haushaltsgeschirrspülmaschine aktiviert bzw. in Betrieb genommen wird. Wird nun der Verdichter durch Aktivieren der Wärmepumpenanordnung in Betrieb genommen, so ist bereits ein Teil des Wärmeträgers oder der gesamte Wärmeträger, der zuvor in dem Schmiermittel gelöst war bzw. innerhalb des Verdichters kondensierte, in die Gasphase übergetreten. Die Wärmepumpenanordnung kann in diesem Fall von Beginn an, d.h. initial, mit maximaler Effizienz betrieben werden.

Erfindungsgemäß ist vorgesehen, dass das Heizelement mit dem Verdichter in wärmeleitendem Kontakt steht. Das Heizelement kann hierbei innerhalb oder auch außerhalb des Verdichters angeordnet sein. Entscheidend ist, dass die vom Heizelement erzeugte Wärme auf den Verdichter und damit auf den im Schmiermittel gelösten bzw. innerhalb des Verdichters kondensierten Wärmeträger übertragbar ist und hierbei ein Verdampfen des flüssig vorliegenden Wärmeträgers im Verdichter bewirkt. Denkbar ist beispielsweise, dass das Heizelement über einen Wärmetauscher mit dem Verdichter in wärmeleitendem Kontakt steht.

Ebenso ist es möglich, dass das Heizelement den Verdichter zumindest abschnittsweise umgibt. Das Heizelement kann beispielsweise an einer Außenwandung des Verdichters platziert sein. Ebenso ist es möglich, dass das Heizelement den Verdichter ganz oder teilweise hüllenförmig umgibt. Das Heizelement ist in diesem Fall als Heizmantel ausgebildet.

Alternativ hierzu oder zusätzlich ist es auch möglich, dass das Heizelement innerhalb des Verdichters platziert ist. Beispielsweise könnte das Heizelement als Heizschlange ausgebildet sein, die ganz oder teilweise in das Schmiermittel ragt und dieses durch direkten Kontakt erwärmt.

Ebenso könnte der Verdichter mit einer Isolierung versehen sein, die den Innenraum des Verdichters, in dem sich das Schmiermittel befindet, gegenüber der Umgebung thermisch isoliert. Hierdurch würde die Aufheizung des Schmiermittels und damit auch des Wärmeträgers beschleunigt, sobald das Heizelement aktiviert ist. Ebenso würde ein Abkühlen des Schmiermittels bzw. des sich im Verdichter befindlichen Wärmeträgers verlangsamt werden, nachdem das Heizelement bzw. der Verdichter außer Betrieb genommen wurde. Hierdurch würde die Menge an Wärmeträger, die innerhalb des Verdichters kondensiert und beispielsweise ins Schmiermittel übergeht, verringert.

Gemäß einer vorteilhaften Weiterbildung ist vorgesehen, dass das Heizelement als elektrisches Heizelement ausgebildet ist. In diesem Fall könnte beispielsweise ein Heizelement zum Einsatz kommen, welches als elektrische Widerstandsheizung ausgebildet ist. Das elektrische Heizelement steht vorzugsweise mit einer Steuer- und/oder Regeleinheit der Haushaltsgeschirrspülmaschine in Verbindung, über die sich das Heizelement an- und ausschalten lässt und/oder mit dessen Hilfe sich die Heizleistung des Heizelements regulieren lässt. Selbstverständlich ist es auch denkbar, dass mehrere Heizelemente zum Einsatz kommen, wobei beispielsweise ein Heizelement innerhalb des Verdichters und ein Heizelement außerhalb des Verdichters, beispielsweise an dessen Außenwandung, angeordnet sein kann.

Erfindungsgemäß ist vorgesehen, dass das Heizelement durch eine Spülflottenheizung der Haushaltsgeschirrspülmaschine gebildet ist. Es kommt also ein Heizelement zum Einsatz, dass ausgebildet ist, die in der Haushaltsgeschirrspülmaschine zirkulierende Spülflotte zu erwärmen. Dies ist immer dann der Fall, wenn erwärmte Spülflotte während eines Spülprogramms benötigt wird, um die Reinigung des Spülguts zu bewirken. Als Spülflottenheizung kann beispielsweise eine elektrische Widerstandsheizung zum Einsatz kommen, die von der Spülflotte passiert wird, wobei hierbei Wärme von der Spülflottenheizung auf die Spülflotte übertragen wird. Denkbar wäre es in diesem Zusammenhang beispielsweise, dass der Verdichter in wärmeleitenden Kontakt mit einer Spülflottenleitung oder mit der Spülflottenheizung steht. Der wärmeleitende Kontakt kann beispielsweise über einen Wärmetauscher oder einen direkten Kontakt zwischen einer Wandung des Verdichters und einer Wandung der Spülflottenheizung hergestellt sein.

Gemäß einer vorteilhaften Weiterbildung ist vorgesehen, dass die Haushaltsgeschirrspülmaschine einen Temperatursensor aufweist, wobei der Temperatursensor ausgebildet ist, die Temperatur des Wärmeträgers oder eines im Verdichter vorhandenen Schmiermittels oder die Änderung einer oder mehrerer der genannten Temperaturen zu detektieren. Der Temperatursensor kann beispielsweise derart platziert sein, dass er in das Schmiermittel im Verdichter ragt. Auch kann der Temperatursensor derart innerhalb des Verdichters angeordnet sein, dass er die Temperatur des im Verdichter gasförmig vorliegenden Wärmeträgers detektieren kann. Auch die Anordnung des Temperatursensors in einer Wärmeträgerleitung außerhalb des Verdichters ist denkbar, so dass in diesem Fall die Temperatur des gasförmig vorliegenden Wärmeträgers außerhalb des Verdichters ermittelbar ist. Der Temperaturfühler sollte wiederum mit der Steuer- und/oder Regeleinheit der Haushaltsgeschirrspülmaschine in Verbindung stehen. Ferner sollte die Steuer- und/oder Regeleinheit ausgebildet sein, das Heizelement in Abhängigkeit der ermittelten Temperatur zu betreiben, d.h. an- und auszuschalten und/oder dessen Heizleistung zu regulieren.

Nach einer vorteilhaften Weiterbildung ist vorgesehen, dass die Haushaltsgeschirrspülmaschine eine bereits genannte Steuer- und/oder Regeleinheit sowie ein mit der Steuer- und/oder Regeleinheit in Verbindung stehendes Bedienelement für einen Bediener der Haushaltsgeschirrspülmaschine umfasst, wobei über das Bedienelement auswählbar ist, ob das Heizelement während eines Spülprogramms betrieben wird oder nicht. Der Bediener kann also vor Beginn des Spülprogramms (oder insbesondere auch während des Spülprogramms) entscheiden, ob das Heizelement während des Spülprogramms betrieben wird oder nicht. Hierdurch ist es möglich, entweder die Zeitdauer des Spülprogramms durch Aktivieren des Heizelements zu verkürzen oder den Energiebedarf der Haushaltsgeschirrspülmaschine während des Spülprogramms durch Deaktivierung des Heizelements zu minimieren (Ecomodus). Bei dem Bedienelement kann es sich beispielsweise um einen Bedienknopf oder ein Bedienrad oder auch um ein touchsensitives Display handeln.

Darüber hinaus wird ein Verfahren zum Betreiben einer Haushaltsgeschirrspülmaschine mit einer Wärmepumpenanordnung beschrieben, die bei ihrem Betrieb von einem Wärmeträger durchströmt wird. Hinsichtlich der körperlichen Merkmale der Wärmepumpenanordnung (Verdampfer, Verdichter, Verflüssiger, Expansionsorgans) wird auf die bisherige und nachfolgende Beschreibung verwiesen.

Das Verfahren zeichnet sich nun dadurch aus, dass der im Verdichter vorhandene Wärmeträger mit Hilfe zumindest eines Heizelements der Haushaltsgeschirrspülmaschine wenigstens vor dem Betrieb und/oder während des Betriebs des Verdichters derart erwärmt wird, dass im Verdichter flüssig vorliegender Wärmeträger vor und/oder während des Betriebs des Verdichters zumindest teilweise in die Gasphase überführt wird. Dies hat den Vorteil, dass der Wärmeträger, der innerhalb des Verdichters bei deaktiviertem Verdichter kondensiert ist, in die Gasphase überführt wird. Hierdurch steht eine maximale Menge an gasförmigem Wärmeträger innerhalb des Verdichters zur Verfügung, der beim Betrieb der Wärmepumpenanordnung verdichtet und damit erwärmt werden kann. Der Wirkungsgrad der Wärmepumpenanordnung wird hierdurch gegenüber dem Stand der Technik erhöht.

Insbesondere ist eine entsprechende Erwärmung des flüssig vorliegenden Wärmeträgers auch dann von Vorteil, wenn der Verdichter ein Schmiermittel aufweist, in dem sich der kondensierte Wärmeträger löst, wenn das Schmiermittel und/oder der Wärmeträger eine bestimmte Temperatur unterschreitet. Dies ist immer dann der Fall, wenn der Verdichter für einen bestimmten Zeitraum, insbesondere zwischen zwei Spülprogrammen, nicht betrieben wird und sich hierbei auf die Umgebungstemperatur abkühlt.

Gemäß einer vorteilhaften Weiterbildung ist vorgesehen, dass der im Verdichter vorhandene Wärmeträger mit Hilfe des Heizelements unmittelbar vor Beginn bzw. Start einer Heizphase eines Spülprogramms erwärmt wird, wobei während der Heizphase in der Haushaltsgeschirrspülmaschine vorhandene Spülflotte durch Betrieb der Wärmepumpenanordnung erwärmt wird. Beispielsweise wäre es denkbar, das Heizelement zwischen einer und zehn Minuten vor Beginn bzw. Start der Heizphase zu aktivieren, so dass sichergestellt ist, dass zu Beginn der Heizphase eine ausreichende Menge an gasförmigem Wärmeträger zur Verfügung steht. Zusätzlich oder alternativ hierzu könnte das Heizelement auch während des Beginns bzw. während eines Anfangsabschnitts einer Heizphase eines Spülprogramms betrieben werden, um die Erwärmung des innerhalb des Verdichters vorliegenden flüssigen Wärmeträgers zu bewirken.

Nach einer vorteilhaften Weiterbildung ist vorgesehen, dass die Heizphase einen Abschnitt eines Reinigungsschritts und/oder eines Klarspülschritts und/oder eines Trocknungsschritts des Spülprogramms bildet. Während des Reinigungsschritts ist vorgesehen, dass das Spülgut zumindest zeitweise mit der erwärmten Spülflotte beaufschlagt wird, um Verunreinigungen vom Spülgut gut zu lösen. Während eines Klarspülschritts ist vorgesehen, dass das Spülgut ebenfalls mit erwärmte Spülflotte beaufschlagt wird, wobei der Spülflotte vor oder während des Klarspülschritts ein Klarspülmittel zugegeben wird. Das Klarspülmittel hat, wie aus dem Stand der Technik bekannt, die Aufgabe, eine nachfolgende Trocknung des Spülguts zu beschleunigen bzw. eine Schlierenbildung auf dem Spülgut während der Trocknung zu verhindern. Nach Beendigung des Klarspülschritts wird ein Trocknungsschritt des Spülprogramms durchlaufen, währenddessen das Spülgut bzw. die innerhalb des Aufnahmeraums der Haushaltsgeschirrspülmaschine vorhandene Luft mit Hilfe der Wärmepumpenanordnung erwärmt wird.

Gemäß einer vorteilhaften Weiterbildung ist vorgesehen, dass der im Verdichter vorhandene Wärmeträger mit Hilfe des Heizelements vor und/oder während eines Vorspülschritts und/oder eines Zwischenspülschritts des Spülprogramms erwärmt wird. Ein Vorspülschritt kann zu Beginn eines Spülprogramms vorgesehen sein. Während des Vorspülschritts wird das Spülgut mit, vorzugsweise erwärmter, Spülflotte beaufschlagt, um grobe Verunreinigungen vor dem nachfolgenden Reinigungsschritt vom Spülgut zu lösen. Ebenso kann ein Zwischenspülschritt vorgesehen sein, der vorzugsweise zwischen dem Reinigungsschritt und dem Klarspülschritts durchlaufen wird, wobei während dem Zwischenspülschritt noch vorhandene Verunreinigungen oder ein während des Reinigungsschritts zum Einsatz kommendes Reinigungsmittel aus der Haushaltsgeschirrspülmaschine abgeführt wird.

Nach einer vorteilhaften Weiterbildung ist vorgesehen, dass in dem Verdichter vorhandener Wärmeträger während eines Spülprogramms vorzugsweise zwischen 1 min. und 20 min, vorzugsweise zwischen 1 min. und 10 min., mit Hilfe des Heizelements erwärmt wird. Die Dauer des Betriebs des Heizelements kann auch in Abhängigkeit von der Temperatur des Wärmeträgers, vorzugsweise innerhalb des Verdichters, und/oder der Temperatur eines im Verdichter zum Einsatz kommenden Schmiermittels von der Steuer- und/oder Regeleinheit der Haushaltsgeschirrspülmaschine gewählt oder reguliert werden. Auch kann die Dauer des Betriebs des Heizelements in Abhängigkeit von der Umgebungstemperatur der Haushaltsgeschirrspülmaschine und/oder des Zeitraums gewählt werden, der zwischen der Inbetriebnahme des Verdichters und der zurückliegenden Deaktivierung des Verdichters vergangen ist. Auch ist es möglich, das Heizelement nur dann zu betreiben, wenn zwischen zwei Spülprogrammen eine gewisse Mindestzeit vergangen ist. Hintergrund ist die Tatsache, dass der Wärmeträger innerhalb des Verdichters nur dann kondensiert, wenn dessen Temperatur einen gewissen Betrag unterschreitet.

Gemäß einer vorteilhaften Weiterbildung ist vorgesehen, dass die Temperatur des Wärmeträgers oder eines im Verdichter vorhandenen Schmiermittels oder die Änderung einer oder mehrerer der genannten Temperaturen detektiert wird, und dass das Heizelement in Abhängigkeit der Temperatur betrieben wird. Prinzipiell kann die genannte Temperatur mit Hilfe des oben genannten Temperatursensors ermittelt werden. Hinsichtlich der Anordnung des Temperatursensors wird daher auf die obige Beschreibung verwiesen. Insbesondere ist es von Vorteil, wenn das Heizelement betrieben wird, wenn eine oder mehrere der genannten Temperaturen unterhalb eines definierten Grenzwerts liegen. Ebenso kann das Heizelement deaktiviert werden, wenn der genannte Grenzwert oder ein, vom ersten Grenzwert abweichender, weiterer Grenzwert überschritten wird.

Nach einer vorteilhaften Weiterbildung ist vorgesehen, dass das Heizelement zu Beginn dessen Betriebs mit einer höheren Heizleistung betrieben wird als während einer nachfolgenden Betriebsphase des Heizelements. Hierdurch wird sichergestellt, dass der Wärmeträger, der innerhalb des Verdichters in kondensierter Form vorliegt, möglichst rasch in seine Gasphase überführt und vom Verdichter verdichtet werden kann. Die Zeitdauer, während derer das Heizelement mit erhöhter Heizleistung betrieben wird, kann abhängig von der Temperatur des Wärmeträgers und/oder des Schmiermittels innerhalb des Verdichters sein. Auch ist es möglich, dass Heizelement über einen vorgegebenen Zeitraum mit erhöhter Heizleistung zu betreiben.

Gemäß einer vorteilhaften Weiterbildung ist vorgesehen, dass die Heizleistung des Heizelements zumindest zeitweise von der Temperatur des Wärmeträgers, des genannten Schmiermittels und/oder der Umgebungstemperatur der Haushaltsgeschirrspülmaschine abhängig ist. Beispielsweise wäre es denkbar, das Heizelement nur dann zu betreiben, wenn die Umgebungstemperatur der Haushaltsgeschirrspülmaschine unterhalb eines definierten Grenzwerts liegt. Auch ist es denkbar, die Heizleistung so lange gegenüber einem Normalwert zu erhöhen, bis die Temperatur des genannten Schmiermittels und/oder des sich im Verdichter befindlichen Wärmeträgers oberhalb eines definierten Grenzwerts liegt.

Nach einer vorteilhaften Weiterbildung ist vorgesehen, dass das Heizelement betrieben wird, wenn die Umgebungstemperatur der Haushaltsgeschirrspülmaschine einen vorgegebenen Minimalbetrag aufweist oder diesen unterschreitet, wobei das Heizelement in diesem Fall vorzugsweise auch außerhalb eines Spülprogramms betrieben wird. Dies stellt sicher, dass auch außerhalb der eigentlichen Betriebszeiten der Haushaltsgeschirrspülmaschine möglichst wenig Wärmeträger innerhalb des Verdichters kondensiert oder wieder in die Gasphase übertritt. Beispielsweise wäre es denkbar, das Heizelement in regelmäßigen zeitlichen Abständen auch dann zu betreiben, wenn kein Spülprogramm gestartet wird.

Die Erfindung und ihre vorteilhaften Aus- und Weiterbildungen sowie deren Vorteile werden nachfolgend anhand von Zeichnungen näher erläutert. Es zeigen, jeweils in einer schematischen Prinzipskizze:
- **Figur 1**: ausgewählte Abschnitte einer Haushaltsgeschirrspülmaschine,
- **Figur 2**: einen teilweise geschnittenen Verdichter,
- **Figur 3**: ein Zeit-Temperatur-Diagramm eines Spülprogramms,
- **Figur 4**: ein weiteres Zeit-Temperatur-Diagramm eines Spülprogramms,
- **Figur 5**: ein Zustandsdiagramm einer Schmiermittel-Wärmeträger-Mischung, und
- **Figur 6**: ein weiteres Zustandsdiagramm einer Schmiermittel-Wärmeträger-Mischung.

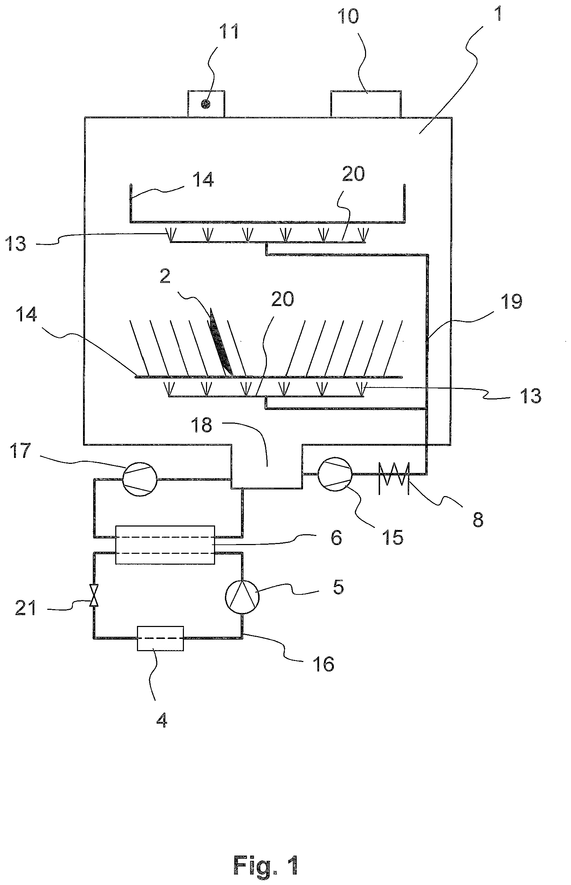

Figur 1 zeigt ausgewählte Abschnitte einer Haushaltsgeschirrspülmaschine. Hierbei sind nur diejenigen Bestandteile der Haushaltsgeschirrspülmaschine gezeigt, mit Bezugszeichen versehen und erläutert, welche für das Verständnis der Erfindung erforderlich sind. Es versteht sich von selbst, dass die erfindungsgemäße Haushaltsgeschirrspülmaschine weitere Teile und Baugruppen umfassen kann.

Wie Figur 1 zu entnehmen ist, umfasst die Haushaltsgeschirrspülmaschine einen Aufnahmeraum 1 für zu reinigendes Spülgut 2 (z.B. Geschirr) sowie einen oder mehrere Geschirrskörbe 14 zur Aufnahme des Spülguts 2. Ferner ist eine Umwälzpumpe 15 vorgesehen, mit deren Hilfe Spülflotte 13 innerhalb der Haushaltsgeschirrspülmaschine zirkuliert werden kann. Die Spülflotte 13 wird während eines Spülprogramms mit Hilfe der Umwälzpumpe 15 von einem Pumpensumpf 18 im unteren Teil der Haushaltsgeschirrspülmaschine in Richtung eines oder mehrerer Sprüharme 20 oder sonstiger Sprüheinrichtungen gepumpt und gelangt von dort auf das zu reinigende Spülgut 2.

Um die Spülflotte 13 während des Spülprogramms bzw. ausgewählter Abschnitte desselben erwärmen zu können, umfasst die Haushaltsgeschirrspülmaschine eine Wärmepumpenanordnung. Diese ist in Figur 1 unterhalb des Aufnahmeraums 1 gezeigt. Diese Anordnung ist nur exemplarisch zu verstehen. Selbstverständlich können die im Folgenden noch näher erläuterten Elemente der Wärmepumpenanordnung auch an anderer Stelle der Haushaltsgeschirrspülmaschine angeordnet sein.

Die Wärmepumpenanordnung umfasst prinzipiell einen Wärmetauscher in Form eines Verdampfers 4 zum Verdampfen eines Wärmeträgers 3 (z. B. Propan (R290)) und einen Verdichter 5 (andere Bezeichnung: Kompressor) zum Verdichten des verdampften Wärmeträgers 3. Mit Hilfe des Verdichters 5 wird der in den Verdichter 5 beim Betrieb der Wärmepumpenanordnung eintretende gasförmige Wärmeträger 3 komprimiert, wobei er sich erwärmt.

Ferner umfasst die Wärmepumpenanordnung einen weiteren Wärmetauscher in Form eines Verflüssigers 6 (andere Bezeichnung: Kondensor), in dem der erwärmte gasförmige Wärmeträger 3 wieder kondensiert und hierbei Wärme abgibt, die beispielsweise für die Erwärmung von in der Haushaltsgeschirrspülmaschine vorhandener Spülflotte 13 genutzt werden kann. Anschließend wird der verflüssigte Wärmeträger 3 mit Hilfe eines Expansionsorgans 21 (in der Regel eines Drosselventils oder eines Kapillarröhrchens) entspannt und gelangt schließlich wieder zurück zum Verdampfer 4, in dem er unter Wärmeaufnahme (beispielsweise aus der Umgebung der Haushaltsgeschirrspülmaschine) wieder in den gasförmigen Zustand übergeht, um dann erneut dem Verdichter 5 zugeführt zu werden. Im Übrigen sind eine oder mehrere Wärmeträgerleitungen 16 vorhanden, über die der Wärmeträger 3 innerhalb der Wärmepumpenanordnung zirkuliert.

Wird nun die Wärmepumpenanordnung während eines Spülprogramms betrieben, so wird im Verflüssiger 6 Wärme vom Wärmeträger 3 auf die durch den Verflüssiger 6 strömende Spülflotte 13 übertragen. Vorzugsweise umfasst die Haushaltsgeschirrspülmaschine eine Spülflottenpumpe 17, mit deren Hilfe die Spülflotte 13 vom Pumpensumpf 18 durch eine Spülflottenleitung 19 zum Verflüssiger 6 und wieder zurück in den Aufnahmeraum 1 gepumpt werden kann.

Während der Wärmeträger 3 beim Betrieb der Wärmepumpenanordnung innerhalb des Verdichters 5 vollständig oder nahezu vollständig gasförmig vorliegt, kann es zu einem Kondensieren des Wärmeträgers 3 innerhalb des Verdichters 5 kommen, wenn dieser nicht betrieben wird und sich daher abkühlt bzw. bereits abgekühlt ist. Da der kondensierte bzw. verflüssigte Wärmeträger 3 bei einem Start des Verdichters 5 von diesem nicht verdichtet werden kann, beeinflusst ein Kondensieren des Wärmeträgers 3 den Wirkungsgrad der Wärmepumpenanordnung negativ.

Erfindungsgemäß wird daher vorgeschlagen, dass der Verdichter 5 mit einem Heizelement 7 in wärmeleitendem Kontakt steht. Beispielsweise wäre es denkbar, dass das Heizelement 7 als Widerstandsheizung ausgebildet ist. Insbesondere könnte das Heizelement 7 innerhalb des Verdichters 5 angeordnet sein und dabei an einer Stelle platziert sein, an der es entweder eine Wandung des Verdichters 5 oder den kondensierten Wärmeträger 3 innerhalb des Verdichters 5 direkt erwärmen kann.

Durch die Erwärmung wird der zuvor kondensierte Wärmeträger 3 von seiner Flüssigphase wieder in seine Gasphase überführt und kann damit vom Verdichter 5 verdichtet und anschließend zum Verflüssiger 6 weitergeleitet werden. Wird das Heizelement 7 vor dem Betrieb des Verdichters 5 aktiviert, so steht eine maximale Menge an gasförmigem Wärmeträger 3 innerhalb des Verdichters 5 zur Verfügung. Der Wirkungsgrad der Wärmepumpenanordnung wird in diesem Fall gegenüber dem im Stand der Technik bekannten Fall verbessert, in dem der Wärmeträger 3 innerhalb des Verdichters 5 vor dem Betrieb des Verdichters 5 nicht erwärmt wird.

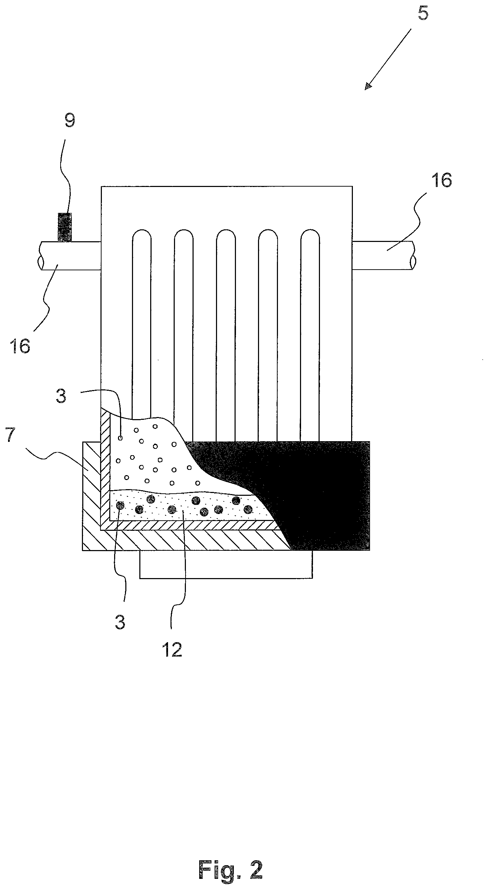

Figur 2 zeigt nun einen teilweise geschnittenen Verdichter 5 in Form einer schematischen Darstellung. Wie dieser Figur zu entnehmen ist, ist innerhalb des Verdichters 5 ein flüssig vorliegendes Schmiermittel 12 vorhanden, welches die Reibung zwischen sich relativ zueinander bewegenden, in Figur 2 nicht gezeigten, Teilen innerhalb des Verdichters 5 reduziert. Da das Schmiermittel 12 räumlich nicht vollständig von dem durch den Verdichter 5 strömenden Wärmeträger 3 getrennt ist, löst sich der Wärmeträger 3 im Schmiermittel 12, sobald er innerhalb des Verdichters 5 kondensiert. Figur 2 zeigt den im Schmiermittel 12 gelösten Wärmeträger 3 durch die schwarz ausgefüllten Kreise. Da in der Regel nicht der gesamte Wärmeträger 3 innerhalb des Verdichters 5 kondensiert, liegt ein Teil des Wärmeträgers 3 auch gasförmig vor (dargestellt durch die kleinen Kreise ohne Füllung).

Um den kondensierten und im Schmiermittel 12 gelösten Wärmeträger 3 vor Beginn des Betriebs des Verdichters 5 in seine Gasphase zu überführen, ist dem Verdichter 5 ein Heizelement 7 in Form eines den Verdichter 5 im unteren Bereich umgebenden Heizmantels zugeordnet. Dieser ist beispielsweise als elektrische Widerstandsheizung ausgebildet und umgibt den Verdichter 5 an seiner Außenseite hüllenförmig.

Wird das Heizelement 7, beispielsweise durch die in Figur 1 angedeutete Steuer- und/oder Regeleinheit 10, aktiviert, so wird nicht nur die Außenwandung des Verdichters 5, sondern auch das innerhalb des Verdichters 5 angeordnete Schmiermittel 12 und der darin gelöste Wärmeträger 3 erwärmt. Die Heizleistung des Heizelements 7 ist dabei derart bemessen, dass die Erwärmung ausreicht, um den im Schmiermittel 12 gelösten Wärmeträger 3 in seine Gasphase zu überführen. Wird der Verdichter 5 anschließend betrieben, so liegt eine maximale Menge des Wärmeträgers 3 gasförmig vor, so dass auch eine ausreichende Menge Wärmeträger 3 verdichtet und zum Verflüssiger 6 transportiert werden kann.

In der erfindungsgemäßen Lösung ist vorgesehen, den Verdichter 5 mit Hilfe einer Spülflottenheizung 8 zu erwärmen, wobei die Spülflottenheizung 8 in Figur 1 angedeutet ist. Somit ist das Heizelement 7 durch die Spülflottenheizung 8 der Haushaltsgeschirrspülmaschine gebildet. Bei der Spülflottenheizung 8 kann es sich ebenfalls um eine elektrische Widerstandsheizung handeln, die in die Spülflottenleitung 19 oder in die Umwälzpumpe 15 integriert ist und die der Erwärmung der Spülflotte 13 während eines Spülprogramms dient. Steht nun die Spülflottenheizung 8 oder die Spülflottenleitung 19 mit dem Verdichter 5 in wärmeleitendem Kontakt, so kann die von der Spülflottenheizung 8 erzeugte Wärme auf den Verdichter 5 und damit auch auf den im Verdichter 5 flüssig vorliegenden Wärmeträger 3 übertragen werden. Auch hierdurch ist es möglich, den zuvor kondensierten Wärmeträger 3 innerhalb des Verdichters 5 in seine Gasphase zu überführen.

Ferner zeigt Figur 2, dass dem Verdichter 5 und/oder der Wärmeträgerleitung 16 ein oder mehrere Temperatursensoren 9 zugeordnet sein können. Der jeweilige Temperatursensor 9 kann dabei ausgebildet sein, die Temperatur des gasförmigen Wärmeträgers 3 oder des flüssigen Schmiermittels 12 mit dem darin gelösten Wärmeträger 3 oder auch eines Abschnitts des Verdichters 5 oder der Wärmeträgerleitung 16 zu überwachen.

Zudem sollten der oder die Temperaturfühler 9 mit der genannten Steuer- und/oder Regeleinheit 10 in Verbindung stehen. Die Steuer- und/oder Regeleinheit 10 kann dabei ausgebildet sein, das Heizelement 7 in Abhängigkeit von einer oder mehreren der genannten Temperaturen zu betreiben. So wäre es beispielsweise sinnvoll, das Heizelement 7 dann zu betreiben, wenn eine oder mehrere der genannten Temperaturen unterhalb eines definierten Grenzwerts liegen, da in diesem Fall davon auszugehen ist, dass ein signifikanter Teil des Wärmeträgers 3 innerhalb des Verdichters 5 in kondensierter bzw. flüssige Form vorliegt. Im Gegensatz hierzu ist es nicht nötig, das Heizelement 7 zu betreiben, wenn eine oder mehrere der genannten Temperaturen einen definierten Grenzwert erreicht oder überschritten haben.

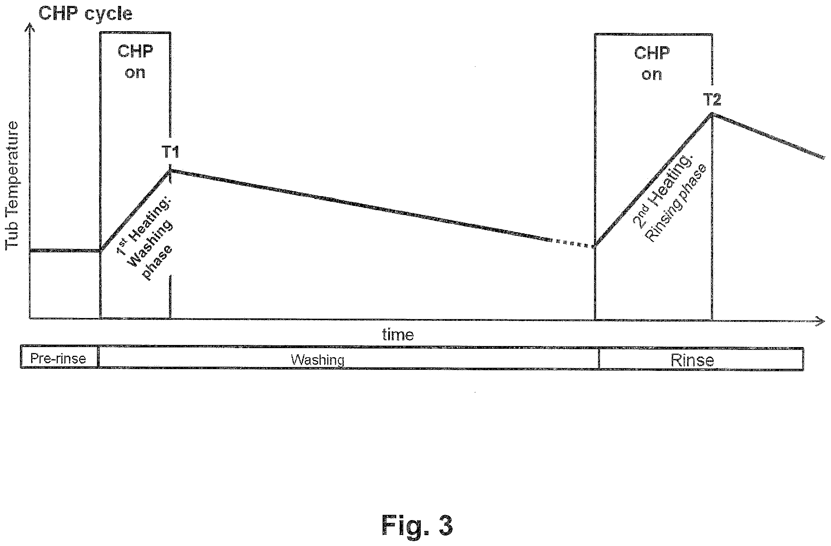

Figur 3 zeigt nun ein mögliches Zeit-Temperatur-Diagramm eines Spülprogramms. Wie diesem Diagramm zu entnehmen ist, wird die Temperatur innerhalb des Aufnahmeraums 1 ("Tub Temperature") während eines Vorspülschritts ("Pre-rinse"), der der Entfernung von groben Verunreinigungen am Spülgut 2 dient, nicht erwärmt. Nach dem Vorspülschritt folgt ein Reinigungsschritt ("Washing"), wobei zu Beginn des Reinigungsschritts die Wärmepumpenanordnung betrieben wird ("CHP on"). Hierdurch wird die Spülflotte bzw. Spülflüssigkeit 13 im Bereich des Verflüssigers 6 erwärmt, so dass auch die Temperatur innerhalb des Aufnahmeraums 1 auf einen Wert T1 steigt.

Nach dem Reinigungsschritt folgt schließlich ein Klarspülschritt ("Rinse"), während dessen das Spülgut 2 mit erwärmter Spülflotte 13 beaufschlagt wird, der zuvor ein Klarspülmittel zugesetzt wurde. Auch zu Beginn des Klarspülschritts wird die Wärmepumpenanordnung betrieben, wobei die Temperatur innerhalb des Aufnahmeraums 1 auf einen Wert T2 steigt.

Jeweils kurz vor dem Betrieb der Wärmepumpenanordnung wäre es nun sinnvoll, das Heizelement 7 zu betreiben, um sicherzustellen, dass beim Aktivieren des Verdichters 5 eine maximale Menge des Wärmeträgers 3 innerhalb des Verdichters 5 gasförmig vorliegt.

Auch in Figur 4 ist ein Diagramm gezeigt, welches den Verlauf der Temperatur des Wärmeträgers 3 am Auslass des Verflüssigers 6 ("T_{ref. out condenser}"), der Temperatur innerhalb des Aufnahmeraums 1 ("T_{Tub}"), sowie der Umgebungstemperatur der Haushaltsgeschirrspülmaschine ("T_{amb}") zeigt. Wie insbesondere dem Verlauf der Temperatur des Wärmeträgers 3 zu entnehmen ist, steigt dessen Temperatur ohne den Einsatz eines Heizelements 7 jeweils zu Beginn des Betriebs der Wärmepumpenanordnung (Ansteigen der entsprechenden Temperaturkurve im Bereich "Shortable period") relativ langsam an. Der jeweils durch den Begriff "Shortable period" gekennzeichnete Zeitraum könnte daher verkürzt werden, wenn vor dem Betrieb der Wärmepumpenanordnung das Heizelement 7 betrieben wird, da hierdurch in flüssiger Form im Verdichter 5 vorliegender Wärmeträger 3 verdampft und dem Wärmeträgerkreislauf zur Verfügung stehen würde.

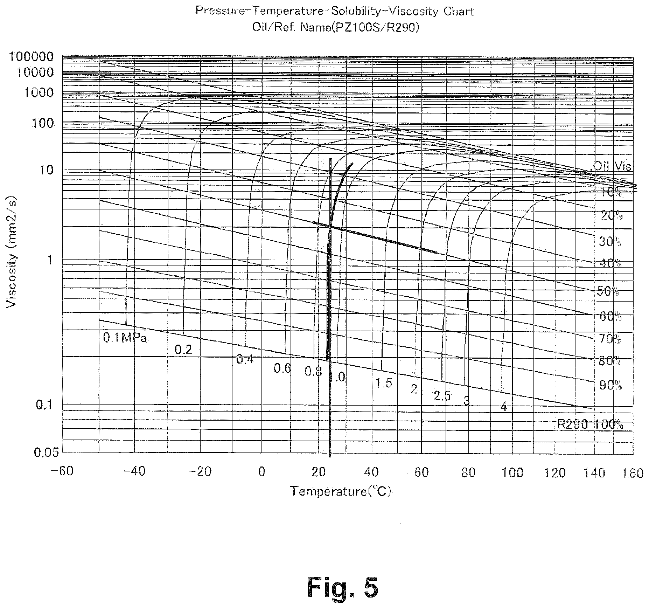

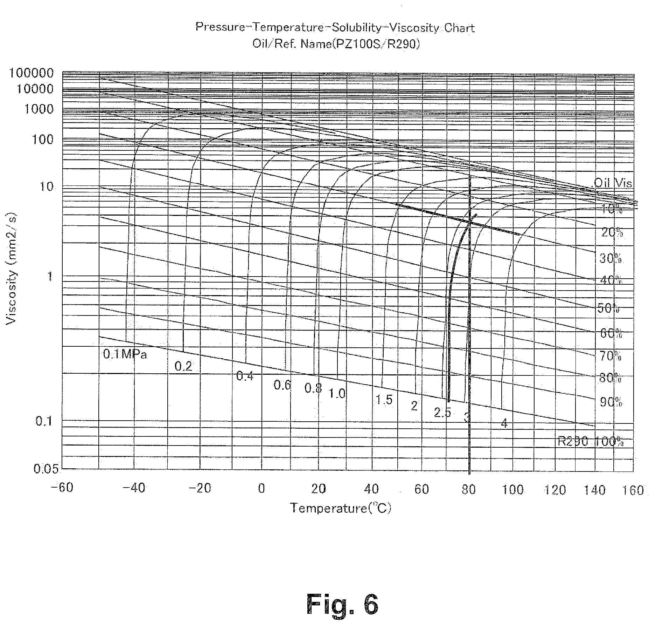

Schließlich zeigen die Figuren 5 und 6 jeweils ein Zustandsdiagramm einer Mischung eines Schmiermittels 12 (vorliegend: PZ100S) und eines darin gelösten Wärmeträgers 3 (im gezeigten Fall: R290).

Schneidet man hier die Linie konstanter Temperatur mit der Linie konstanten Drucks, so erhält man auf der rechten Seite die Prozentangabe des im Schmiermittel 12 gelösten Wärmeträgers 3. Beispielsweise herrschte im Fall von Figur 5 innerhalb des Verdichters 5 eine Temperatur von ca. 23°C bei einem Druck von ca. 0,9 MPa. Aus dem Schnittpunkt beider Linien ergibt sich schließlich, dass die Masse des im Schmiermittel 12 gelösten flüssigen Wärmeträgers 3 50 % der Masse des Schmiermittels 12 beträgt.

Wird die Temperatur der Mischung aus Schmiermittel 12 und Wärmeträger 3 mit Hilfe des Heizelements 7 auf 80 °C erhöht (siehe Figur 6), so erhöht sich auch der Druck des gasförmigen Wärmeträgers 3 innerhalb des Verdichters 5, da ein gewisser Anteil des im Schmiermittel 12 gelösten Wärmeträgers 3 in die Gasphase übergeht. Der Anteil des im Schmiermittel 12 gelösten Wärmeträgers 3 sinkt hierdurch auf 30 %. Mit anderen Worten: Durch die Erwärmung des Verdichters 5 wird zuvor kondensierter Wärmeträger 3 wieder verdampft und steht damit dem Wärmeträgerkreislauf zur Verfügung.

Geht man beispielsweise davon aus, dass im Verdichter 5 210 cm³ Schmiermittel 12 und im Wärmeträgerkreislauf 150 g Wärmeträger 3 vorhanden sind, so sind im erstgenannten Fall 105 g des Wärmeträgers 3 im Schmiermittel 12 gelöst, während dieser Betrag im zweitgenannten Fall durch die Aktivierung des Heizelements 7 auf unter 63 g fällt. Im letzten Fall stehen damit über 40 g mehr Wärmeträger 3 in Gasform im Verdichter 5 zur Verfügung als im erstgenannten Fall (d. h. ohne Einsatz des Heizelements 7).

Im Übrigen ist die Erfindung nicht auf das dargestellte Ausführungsbeispiel beschränkt. Vielmehr sind sämtliche Kombinationen der beschriebenen Einzelmerkmale, wie sie in den Ansprüchen, der Beschreibung sowie den Figuren gezeigt oder beschrieben sind und soweit eine entsprechende Kombination technisch möglich bzw. sinnvoll erscheint, Gegenstand der Erfindung.

### Bezugszeichenliste

- 1: Aufnahmeraum
- 2: Spülgut
- 3: Wärmeträger
- 4: Verdampfer
- 5: Verdichter
- 6: Verflüssiger
- 7: Heizelement
- 8: Spülflottenheizung
- 9: Temperatursensor
- 10: Steuer- und/oder Regeleinheit
- 11: Bedienelement
- 12: Schmiermittel
- 13: Spülflotte
- 14: Geschirrkorb
- 15: Umwälzpumpe
- 16: Wärmeträgerleitung
- 17: Spülflottenpumpe
- 18: Pumpensumpf
- 19: Spülflottenleitung
- 20: Sprüharm
- 21: Expansionsorgan

## Patentansprüche

1. Haushaltsgeschirrspülmaschine mit einem Aufnahmeraum (1) zur Aufnahme von Spülgut (2) und einer Wärmepumpenanordnung, die bei ihrem Betrieb von einem Wärmeträger (3) durchströmt wird, wobei die Wärmepumpenanordnung zumindest einen Verdampfer (4) zum Verdampfen des Wärmeträgers (3), einen Verdichter (5) zum Verdichten des vom Verdampfer (4) kommenden Wärmeträgers (3) und einen Verflüssiger (6) zum Kondensieren des vom Verdichter (5) kommenden Wärmeträgers (3) umfasst, **dadurch gekennzeichnet, dass** dem Verdichter (5) zumindest ein Heizelement (7) zugeordnet ist, mit dessen Hilfe der im Verdichter (5) vorhandene Wärmeträger (3) wenigstens vor dem Betrieb und/oder während des Betriebs des Verdichters (5) derart erwärmbar ist, dass im Verdichter (5) flüssig vorliegender Wärmeträger (3) zumindest teilweise in die Gasphase überführt wird, wobei das Heizelement (7) mit dem Verdichter (5) in wärmeleitendem Kontakt steht, wobei das Heizelement (7) den Verdichter (5) zumindest abschnittsweise, vorzugsweise hüllenförmig, umgibt, und wobei das Heizelement (7) durch eine Spülflottenheizung (8) der Haushaltsgeschirrspülmaschine zur Erwärmung einer in der Haushaltsgeschirrspülmaschine zirkulierenden Spülflotte gebildet ist.

2. Haushaltsgeschirrspülmaschine gemäß einem der vorangegangenen Ansprüche, **dadurch gekennzeichnet, dass** das Heizelement (7) als elektrisches Heizelement (7) ausgebildet ist.

3. Haushaltsgeschirrspülmaschine gemäß einem der vorangegangenen Ansprüche, **dadurch gekennzeichnet, dass** die Haushaltsgeschirrspülmaschine einen Temperatursensor (9) aufweist, wobei der Temperatursensor (9) ausgebildet ist, die Temperatur des Wärmeträgers (3) oder eines im Verdichter (5) vorhandenen Schmiermittels (12) oder die Änderung einer oder mehrerer der genannten Temperaturen zu detektieren.

4. Haushaltsgeschirrspülmaschine gemäß einem der vorangegangenen Ansprüche, **dadurch gekennzeichnet, dass** die Haushaltsgeschirrspülmaschine eine Steuer- und/oder Regeleinheit (10) sowie ein mit der Steuer- und/oder Regeleinheit (10) in Verbindung stehendes Bedienelement (11) für einen Bediener der Haushaltsgeschirrspülmaschine umfasst, wobei über das Bedienelement (11) auswählbar ist, ob das Heizelement (7) während eines Spülprogramms betrieben wird oder nicht.

5. Verfahren zum Betreiben einer Haushaltsgeschirrspülmaschine mit einer Wärmepumpenanordnung, die bei ihrem Betrieb von einem Wärmeträger (3) durchströmt wird, und die unter anderem einen Verdampfer (4), einen Verdichter (5) und einen Verflüssiger (6) umfasst, wobei der Wärmeträger (3) beim Betrieb der Wärmepumpenanordnung mit Hilfe des Verdampfers (4) verdampft wird, wobei der vom Verdampfer (4) kommende Wärmeträger (3) mit Hilfe des Verdichters (5) verdichtet wird, und wobei der vom Verdichter (5) kommende Wärmeträger (3) mit Hilfe des Verflüssigers (6) verflüssigt wird, **dadurch gekennzeichnet, dass** der im Verdichter (5) vorhandene Wärmeträger (3) mit Hilfe zumindest eines Heizelements (7) der Haushaltsgeschirrspülmaschine wenigstens vor dem Betrieb und/oder während des Betriebs des Verdichters (5) derart erwärmt wird, dass im Verdichter (5) flüssig vorliegender Wärmeträger (3) vor und/oder während des Betriebs des Verdichters (5) zumindest teilweise in die Gasphase überführt wird, wobei das Heizelement (7) mit dem Verdichter (5) in wärmeleitendem Kontakt steht, wobei das Heizelement (7) den Verdichter (5) zumindest abschnittsweise, vorzugsweise hüllenförmig, umgibt, und wobei das Heizelement (7) durch eine Spülflottenheizung (8) der Haushaltsgeschirrspülmaschine zur Erwärmung einer in der Haushaltsgeschirrspülmaschine zirkulierenden Spülflotte gebildet ist

6. Verfahren gemäß dem vorangegangenen Anspruch, **dadurch gekennzeichnet, dass** der im Verdichter (5) vorhandene Wärmeträger (3) mit Hilfe des Heizelements (7) unmittelbar vor und/oder während des Beginns einer Heizphase eines Spülprogramms erwärmt wird, wobei während der Heizphase in der Haushaltsgeschirrspülmaschine vorhandene Spülflotte (13) erwärmt wird.

7. Verfahren gemäß Anspruch 5 oder 6, **dadurch gekennzeichnet, dass** die Heizphase einen Abschnitt eines Reinigungsschritts und/oder eines Klarspülschritts und/oder eines Trocknungsschritts des Spülprogramms bildet.

8. Verfahren gemäß einem der Ansprüche 5 bis 7, **dadurch gekennzeichnet, dass** der im Verdichter (5) vorhandene Wärmeträger (3) mit Hilfe des Heizelements (7) vor und/oder während eines Vorspülschritts und/oder eines Zwischenspülschritts des Spülprogramms erwärmt wird.

9. Verfahren gemäß einem der Ansprüche 5 bis 8, **dadurch gekennzeichnet, dass** in dem Verdichter (5) vorhandener Wärmeträger (3) während eines Spülprogramms zwischen 1 min. und 20 min, vorzugsweise zwischen 1 min. und 10 min., mit Hilfe des Heizelements (7) erwärmt wird.

10. Verfahren gemäß einem der Ansprüche 5 bis 9, **dadurch gekennzeichnet, dass** die Temperatur des Wärmeträgers (3) oder eines im Verdichter (5) vorhandenen Schmiermittels (12) oder die Änderung einer oder mehrerer der genannten Temperaturen detektiert wird, und dass das Heizelement (7) in Abhängigkeit der Temperatur betrieben wird.

11. Verfahren gemäß einem der Ansprüche 5 bis 10 **dadurch gekennzeichnet, dass** das Heizelement (7) zu Beginn dessen Betriebs mit einer höheren Heizleistung betrieben wird als während einer nachfolgenden Betriebsphase des Heizelements (7).

12. Verfahren gemäß einem der Ansprüche 5 bis 11, **dadurch gekennzeichnet, dass** die Heizleistung des Heizelements (7) zumindest zeitweise von der Temperatur des Wärmeträgers (3), des im Verdichter (5) vorhandenen Schmiermittels (12) und/oder der Umgebungstemperatur der Haushaltsgeschirrspülmaschine abhängig ist.

13. Verfahren gemäß einem der Ansprüche 5 bis 12, **dadurch gekennzeichnet, dass** das Heizelement (7) betrieben wird, wenn die Umgebungstemperatur der Haushaltsgeschirrspülmaschine einen vorgegebenen Minimalbetrag aufweist oder diesen unterschreitet, wobei das Heizelement (7) in diesem Fall vorzugsweise auch außerhalb eines Spülprogramms betrieben wird.

## Claims

1. Household dishwasher with a receiving compartment (1) for receiving items to be washed (2) and a heat pump arrangement, through which a heat carrier (3) flows during its operation, wherein the heat pump arrangement comprises at least an evaporator (4) for evaporating the heat carrier (3), a compressor (5) for compressing the heat carrier (3) coming from the evaporator (4) and a condenser (6) for condensing the heat carrier (3) coming from the compressor (5), **characterised in that** at least one heating element (7) is assigned to the compressor (5), with the aid of which the heat carrier (3) present in the compressor (5) can be heated at least before the operation and/or during the operation of the compressor (5) so that the heat carrier (3) present in liquid form in the compressor (5) is conveyed at least partially into the gas phase, wherein the heating element (7) is in thermal conductive contact with the compressor (5), wherein the heating element (7) surrounds the compressor (5) at least in sections, preferably in a casing-type manner, and wherein the heating element (7) is formed by a washing liquor heater (8) of the household dishwasher for heating a washing liquor circulating in the household dishwasher.

2. Household dishwasher according to one of the preceding claims, **characterised in that** the heating element (7) is embodied as an electric heating element (7).

3. Household dishwasher according to one of the preceding claims, **characterised in that** the household dishwasher has a temperature senor (9), wherein the temperature sensor (9) is embodied to detect the temperature of the heat carrier (3) or a lubricant (12) present in the compressor (5) or the change in one or more of the cited temperatures.

4. Household dishwasher according to one of the preceding claims, **characterised in that** the household dishwasher comprises a control and/or regulating unit (10) and an operating element (11) connected to the control and/or regulating unit (10) for an operator of the household dishwasher, wherein it is possible, by way of the operating element (11), to select whether or not the heating element (7) is operated during a washing programme.

5. Method for operating a household dishwasher with a heat pump arrangement through which a heat carrier (3) flows during it is operation and which inter alia comprises an evaporator (4), a compressor (5) and a condenser (6), wherein during operation of the heat pump arrangement the heat carrier (3) is evaporated with the aid of the evaporator (4), wherein the heat carrier (3) coming from the evaporator (5) is compressed with the aid of the compressor (5), and wherein the heat carrier (3) coming from the compressor (5) is condensed with the aid of the condenser (6), **characterised in that** the heat carrier (3) present in the compressor (5) is heated with the aid of at least one heating element (7) of the household dishwasher at least before the operation and/or during the operation of the compressor (5) so that heat carrier (3) present in liquid form in the compressor (3) is conveyed at least partially into the gas phase before and/or during the operation of the compressor (5), wherein the heating element (7) is in thermal conductive contact with the compressor (5), wherein the heating element (7) surrounds the compressor (5) at least in sections, preferably in a casing-type manner, and wherein the heating element (7) is formed by a washing liquor heater (8) of the household dishwasher for heating a washing liquor circulating in the household dishwasher.

6. Method according to the preceding claim, **characterised in that** the heat carrier (3) present in the compressor (5) is heated with the aid of the heating element (7) immediately before and/or during the start of a heating phase of a washing programme, wherein during the heating phase washing liquor (13) available in the household dishwasher is heated.

7. Method according to claim 5 or 6, **characterised in that** the heating phase forms a section of a cleaning step and/or a rinsing step and/or a drying step of the washing programme.

8. Method according to one of claims 5 to 7, **characterised in that** the heat carrier (3) present in the compressor (5) is heated with the aid of the heating element (7) before and/or during a prerinsing step and/or an intermediate rinsing step of the washing programme.

9. Method according to one of claims 5 to 8, **characterised in that** heat carrier (3) present in the compressor (5) is heated during a washing programme between 1 min and 20 min, preferably between 1 min and 10 min, with the aid of the heating element (7).

10. Method according to one of claims 5 to 9, **characterised in that** the temperature of the heat carrier (3) or a lubricant (12) present in the compressor (5) or the change in one or more of the cited temperatures is detected, and that the heating element (7) is operated as a function of the temperature.

11. Method according to one of claims 5 to 10, **characterised in that** the heating element (7) is operated with a higher heating output at the start of its operation than during a subsequent operating phase of the heating element (7).

12. Method according to one of claims 5 to 11, **characterised in that** the heating output of the heating element (7) is dependent at least sometimes on the temperature of the heat carrier (3), the lubricant (12) present in the compressor (5) and/or on the ambient temperature of the household dishwasher.

13. Method according to one of claims 5 to 12, **characterised in that** the heating element (7) is operated if the ambient temperature of the household dishwasher has a predetermined minimum amount or fails to reach the same, wherein the heating element (7) is in this case preferably also operated outside of a washing programme.

## Revendications

1. Lave-vaisselle domestique avec un compartiment d'accueil (1) destiné à l'accueil de vaisselle à laver (2) et d'un agencement de pompe à chaleur qui est traversé lors de son fonctionnement par un agent caloporteur (3), dans lequel l'agencement de pompe à chaleur comprend au moins un évaporateur (4) destiné à l'évaporation de l'agent caloporteur (3), un compresseur (5) destiné à la compression de l'agent caloporteur (3) venant de l'évaporateur (4) et un liquéfacteur (6) destiné à la condensation de l'agent caloporteur (3) venant du compresseur (5), **caractérisé en ce qu'**au moins un élément chauffant (7) est associé au compresseur (5), à l'aide duquel l'agent caloporteur (3) présent dans le compresseur (5) est apte à être réchauffé au moins avant le fonctionnement et/ou pendant le fonctionnement du compresseur (5) de telle sorte qu'un agent caloporteur (3) présent sous une forme fluide dans le compresseur (5) est passé au moins en partie en phase gazeuse, dans lequel l'élément chauffant (7) est en contact thermo-conducteur avec le compresseur (5), dans lequel l'élément chauffant (7) entoure le compresseur (5) au moins par sections, de préférence sous la forme d'une gaine, et dans lequel l'élément chauffant (7) est formé par le biais d'un chauffage de liquide de rinçage (8) du lave-vaisselle domestique pour le réchauffement d'un liquide de rinçage circulant dans le lave-vaisselle domestique.

2. Lave-vaisselle domestique selon l'une des revendications précédentes, **caractérisé en ce que** l'élément chauffant (7) est réalisé en tant qu'élément chauffant électrique (7).

3. Lave-vaisselle domestique selon l'une des revendications précédentes, **caractérisé en ce que** le lave-vaisselle domestique présente un capteur de température (9), dans lequel le capteur de température (9) est réalisé pour détecter la température de l'agent caloporteur (3) ou d'un lubrifiant (12) présent dans le compresseur (5) ou la modification d'une ou plusieurs des températures citées.

4. Lave-vaisselle domestique selon l'une des revendications précédentes, **caractérisé en ce que** le lave-vaisselle domestique comprend une unité de commande et/ou de réglage (10) ainsi qu'un élément de manipulation (11) relié à l'unité de commande et/ou de réglage (10) pour un opérateur du lave-vaisselle domestique, dans lequel par le biais de l'élément de manipulation (11) il peut être sélectionné si l'élément chauffant (7) fonctionne ou ne fonctionne pas pendant un programme de lavage.

5. Procédé destiné au fonctionnement d'un lave-vaisselle domestique avec un agencement de pompe à chaleur qui est traversé lors de son fonctionnement par un agent caloporteur (3), et qui comprend entre autres un évaporateur (4), un compresseur (5) et un liquéfacteur (6), dans lequel l'agent caloporteur (3) est évaporé à l'aide de l'évaporateur (4) lors du fonctionnement de l'agencement de pompe à chaleur, dans lequel l'agent caloporteur (3) venant de l'évaporateur (4) est comprimé à l'aide du compresseur (5), et dans lequel l'agent caloporteur (3) venant du compresseur (5) est liquéfié à l'aide du liquéfacteur (6), **caractérisé en ce que** l'agent caloporteur (3) présent dans le compresseur (5) est réchauffé à l'aide d'au moins un élément chauffant (7) du lave-vaisselle domestique au moins avant le fonctionnement et/ou pendant le fonctionnement du compresseur (5) de telle sorte qu'un agent caloporteur (3) présent sous une forme fluide dans le compresseur (5) est passé au moins en partie en phase gazeuse avant et/ou pendant le fonctionnement du compresseur (5), dans lequel l'élément chauffant (7) est en contact thermo-conducteur avec le compresseur (5), dans lequel l'élément chauffant (7) entoure le compresseur (5) au moins par sections, de préférence sous la forme d'une gaine, et dans lequel l'élément chauffant (7) est formé par le biais d'un chauffage de liquide de rinçage (8) du lave-vaisselle domestique destiné au réchauffement d'un liquide de rinçage circulant dans le lave-vaisselle domestique.

6. Procédé selon l'une des revendications précédentes, **caractérisé en ce que** l'agent caloporteur (3) présent dans le compresseur (5) est réchauffé à l'aide de l'élément chauffant (7) directement avant et/ou pendant le début d'une phase de chauffage d'un programme de lavage, dans lequel pendant la phase de chauffage le liquide de rinçage (13) présent dans le lave-vaisselle domestique est réchauffé.

7. Procédé selon la revendication 5 ou 6, **caractérisé en ce que** la phase de chauffage forme une section d'une étape de nettoyage et/ou d'une étape de rinçage et/ou d'une étape de séchage du programme de lavage.

8. Procédé selon l'une quelconque des revendications 5 à 7, **caractérisé en ce que** l'agent caloporteur (3) présent dans le compresseur (5) est réchauffé à l'aide de l'élément chauffant (7) avant et/ou pendant une étape de prélavage et/ou une étape de lavage intermédiaire du programme de lavage.

9. Procédé selon l'une des revendications 5 à 8, **caractérisé en ce qu'**un agent caloporteur (3) présent dans le compresseur (5) est réchauffé pendant un programme de lavage entre 1 min. et 20 min., de préférence entre 1 min. et 10 min., à l'aide de l'élément chauffant (7).

10. Procédé selon l'une des revendications 5 à 9, **caractérisé en ce que** la température de l'agent caloporteur (3) ou d'un lubrifiant (12) présent dans le compresseur (5) ou la modification d'une ou plusieurs des températures citées sont détectées, et **en ce que** l'élément chauffant (7) fonctionne en fonction de la température.

11. Procédé selon l'une des revendications 5 à 10, **caractérisé en ce que** l'élément chauffant (7) au début de son fonctionnement fonctionne avec une puissance de chauffage plus élevée que pendant une phase de fonctionnement suivante de l'élément chauffant (7).

12. Procédé selon l'une des revendications 5 à 11, **caractérisé en ce que** la capacité de chauffage de l'élément chauffant (7) est dépendante au moins de manière temporaire de la température de l'agent caloporteur (3), du lubrifiant (12) présent dans le compresseur (5) et/ou de la température ambiante du lave-vaisselle domestique.

13. Procédé selon l'une des revendications 5 à 12, **caractérisé en ce que** l'élément chauffant (7) fonctionne lorsque la température ambiante du lave-vaisselle domestique présente une quantité minimale prédéfinie ou ne l'atteint pas, dans lequel l'élément chauffant (7) fonctionne dans ce cas de préférence également en dehors d'un programme de lavage.
